# EUROPEAN PATENT SPECIFICATION

(11) **EP 2 066 049 B1**
(45) Date of publication and mention of the grant of the patent: **02.03.2011**
(21) Application number: 07291428.6
(22) Date of filing: 30.11.2007
(51) Int. Cl.: H04B 17/02, H04B 1/40

(54) **Method of performing a test of a transceiver**
Verfahren zur Überprüfung eines Sende-/Empfangsgerätes
Procédé pour effectuer un test sur un émetteur-récepteur

(43) Date of publication of application: 03.06.2009
(73) Proprietor: LUCENT TECHNOLOGIES INC., Murray Hill, NJ 07974-0636 (US)
(72) Inventor: Kaminski, Gerhard, 90765 Fürth (DE)
(74) Representative: Schmidt, Werner Karl

(56) References cited:
- US-A1- 2004 087 279
- US-A1- 2007 026 809

## Description

The present invention relates to a method of performing a test of a transceiver, and a corresponding transceiver to execute said method.

Base station transceivers for mobile communication systems require extensive functional tests to guarantee compliance to internal and external specifications and standards. It is common to use either an external test equipment or to execute a built-in test in order to perform these functional tests.

In the first case, a device under test (= DUT) is connected to a specially tailored test fixture. A number of special Rf tests for the receive and transmit chains are performed (Rf = radio frequency). Every test requires a number of initialisation and readout procedures, i.e., a communication with the test equipment. Test extensions require a software change and often an additional equipment. Test enhancements also require often a new or changed test equipment. Thus, the external test equipment approach is expensive, time-consuming and not flexible. Moreover, no Rf functional tests are possible during deployment and in the field.

In the second case, when using built-in tests to enable self testing, it is most common to extend the transceiver by some additional Rf-functions. These add-on functions are among others: converters to translate TX band into RX band, monitoring the transmitter via a special receiver, CW sources to provide a test signal, and testing the receiver via special test tone generators which are switched off in normal operation (TX = Transmit/Transmitter; RX = Receive/Receiver; CW = Continuous Wave). Those functions are built into the device for testing, only, and are disabled during normal operation. All those "add-ons" are expensive and lead to additional costs. Moreover, these "add-ons" must be tested as well, still increasing the cost. Therefore, it is not justified to implement these add-on functions in "cost sensitive" products. As was the case with the external test equipment approach, the built-in test add-ons lead to an inflexible solution, too.

US 2007/0026809 A1 describes a method and system for testing a transceiver communication device operating in a test mode, whereby a transmitter output signal generated by a transmitter is adjusted and provided as a loop back to a receiver. The adjustment includes shifting a frequency and attenuating amplitude of the transmitter output signal to substantially match a predefined frequency and a predefined amplitude of a receiver input signal received by the receiver. A pass or fail status of the device is determined by comparing transmitted and received data.

US 2004/0087279 A1 describes a transmitting and receiving unit which includes a receiving branch and a transmitting branch that are in each case constructed for conducting complex signals, with a control device that drives a switch by which either a phase-locked loop is switched through to frequency converters provided at the transmitting and receiving end, for providing a common carrier frequency, or in each case an independently operating PLL is provided for the transmitting and receiving branch. Such a configuration enables the transmitter, for example, to operate with direct conversion whereas the receiver can operate, for example, on the low IF principle. The invention is suitable for OFDM multi-carrier systems.

It is the object of the present invention to provide an enhanced solution to perform a functional test of a transceiver.

The object of the present invention is achieved by a method of performing a test of a transceiver comprising a radio frequency transmitter unit with a transmitter oscillator providing a carrier frequency of an outgoing radio frequency signal of the radio frequency transmitter unit and a radio frequency receiver unit with a receiver oscillator providing a frequency signal for demodulation of an incoming radio frequency signal, whereby the method comprises the steps of coupling a signal of the transmitter oscillator to one or more circuit points of the receiver unit or a signal of the receiver oscillator to one or more circuit points of the transmitter unit, and controlling, by a test circuit, the signal of the transmitter oscillator or receiver oscillator to perform the test, whereby the receiver oscillator and the transmitter oscillator are wide band oscillators which are able to cover the complete receiver and transmitter frequency range. The object of the present invention is further achieved by a transceiver comprising a radio frequency transmitter unit with a transmitter oscillator providing a carrier frequency of an outgoing radio frequency signal of the radio frequency transmitter unit, a radio frequency receiver unit with a receiver oscillator providing a frequency signal for demodulation of an incoming radio frequency signal, one or more switching and coupling nodes adapted to couple a signal of the transmitter oscillator to one or more circuit points of the receiver unit or a signal of the receiver oscillator to one or more circuit points of the transmitter unit, and a test circuit adapted to control said one or more switching and coupling nodes and the signal of the transmitter oscillator or receiver oscillator to perform a test of the transceiver, whereby the receiver oscillator and the transmitter oscillator are wide band oscillators which are able to cover the complete receiver and transmitter frequency range.

The term "test circuit" may denote a hardware unit, a computer program product, or a combination of both. Preferably, the test circuit comprises a computer program product providing a test function/functionality, such as an entity of a computer software. The computer program product is stored in a storage unit associated with the transceiver. The computer program product can be activated if required to provide the test functionality. Preferably, no separate computer or hardware unit or hardware circuitry is needed to implement the test circuit providing the test function. In this case, an alternative expression for the term "test circuit" would be the term "test circuit functionality".

It is also possible that the test circuit further comprises a hardware add-on to the computer program product. This hardware add-on may be a test-and-tuning bus which is required for the switching of the oscillators to the circuit points and for performing the test, e.g., for a tuning of the oscillators.

The suggested self-testing and calibration configuration for transceiver systems provides a built-in self testing/calibrating function. The invention avoids the need of additional Rf-functional blocks designed for self-testing, only. Only functional Rf-blocks which are already built in for normal operation are used in the self-test. Therefore - although a lot of Rf key tests are supported - there is no need for external test equipment nor a need for expensive "add-ons" which are used in the test, only.

The invention is basically related to a homodyne transceiver architecture. The reason for this is the fact that the RX frequency range and the TX frequency range is separated by the duplex distance, only. In "normal" super heterodyne transceivers, TX - and RX IF offsets will be added (IF = Intermediate Frequency). It will be remarked that the use of wide band PLL's enables one to implement the above described invention in heterodyne transceiver architectures as well (PLL = Phase-Locked Loop).

The present invention reduces test time and test equipment. It works with a build-in of so called "coupling and switching nodes", i.e., simple and cheap, fully-integrated add-on's which are easily available. Furthermore, no adjustment of the self-testing functions is required.

The invention makes use of a wide band (Frac-N or Integer) RX / TX local oscillator which covers the RX range as well as the TX range, e.g., PLLs. Those wide band PLLs will be the next generation of local oscillators and enable the design of software defined radios (= SDR) or software re-configurable radios. The SDR reduces the analogue front-end to a large extent. Analogue functions are reproduce - as far as possible - by a digital post-processing. The analogue architecture of a software re-configurable radio is chosen such that a maximum of flexibility is achieved. This is the case with a homodyne transceiver.

The invention provides extensions to the standard homodyne transceiver system, in order to enable inexpensive self-testing and calibration during production, deploying, and in the field. At the same time, the invention is prepared for the (future) homodyne SW re-configurable transceiver.

The invention provides for transceivers that can be used for self test in the field and provides much more self-test functionality than currently used tone generators and mixers.

Built-in tests and calibrations according to the present invention dramatically reduces the effort during production and deployment. Furthermore, built-in tests can take place in the field and enables one to generate key quality figures for continuous quality improvement.

Further advantages are achieved by the embodiments of the invention indicated by the dependent claims.

According to a preferred embodiment of the invention, the test circuit adapts the signal of the transmitter oscillator or the signal receiver oscillator by control commands: The adjustment controlled by the test circuit is so that the signal of the transmitter oscillator covers a frequency range of the receiver unit or that the signal of the receiver oscillator covers a frequency range of the transmitter unit. Preferably, this is made possible by the use of total range VCOs (= Voltage Controlled Oscillator). Both, the RX and the TX local oscillator covers the complete RX and TX range. This means that the RX VCO can be used for the TX unit and vice versa.

According to another preferred embodiment of the invention, a digital output of the receiver unit is provided as a feedback signal to the test circuit. The test circuit adjusts, based on the received feedback signal, a control signal sent from the test circuit to the transmitter oscillator which feeds a circuit point of the receiver unit. The control signal is adapted to control a function of the transmitter oscillator, in particular to trigger a change of an output signal generated by the transmitter oscillator. The adjustment of the control signal is such that the transmitter oscillator outputs a pre-defined signal, e.g., a desired test frequency, preferably according to a pre-defined test pattern. It is also possible that a processor unit first reads the output of the receiver unit and, based on this digital output, sends a feedback signal to the test circuit. Preferably, the test circuit tunes, by means of the control signal, the transmitter oscillator to a desired test frequency (CW signal).

According to another preferred embodiment of the invention, an external measuring equipment reads and analyses the outgoing radio frequency signal of the transmitter unit. Based on the analysed radio frequency signal, the measuring equipment sends a feedback signal to the test circuit. The test circuit adjusts, based on the received feedback signal, a control signal sent from the test circuit to the receiver oscillator which feeds a circuit point of the transmitter unit. The adjustment of the control signals is so that the receiver oscillator outputs a predefined signal, preferably according to a pre-defined test pattern.

In a preferred embodiment, a switching and coupling node connects a continuous wave signal of the transmitter oscillator to an input of the receiver unit. The test circuit tunes the transmitter oscillator to a frequency range of the radio frequency signal coming into the receiver unit. By means of this tuning action, the test circuit tests and tunes one or more filters of the receiver unit.

According to another preferred embodiment of the invention, the receiver unit of the transceiver comprises, in addition to the receiver oscillator, a receiver band pass filter at the input of the receiver unit, an I/Q demodulator located behind said receiver band pass filter (I/Q = in-phase/quadrature), I/Q base band low pass filters located behind said I/Q demodulator, and a digital post processing unit located behind said I/Q base band low pass filters. Preferably, the I/Q base band low pass filters comprise a base band low pass filter associated with an in-phase channel and a base band low pass filter associated with a quadrature channel. The prepositions "behind" and "before" are relative to the flow direction of an incoming RF signal (in the receiver unit) and an outgoing RF signal (in the transmitter unit). One of said one or more switching and coupling nodes couples the signal of the transmitter oscillator to a circuit point located before the receiver band pass filter. The test circuit determines which signal is generated by the transmitter oscillator. Preferably, the generation of the signal of the transmitter oscillator is in accordance with a test pattern implemented by the test circuit. In parallel to the input of the transmitter oscillator to said circuit point, the test circuit tunes said receiver band pass filter and the I/Q base band low pass filters. In parallel to the tuning action, the test circuit receives a signal from the digital post processing unit as a feedback signal. Depending on the feedback signal, the test circuit adjusts the tuning.

Preferably, the receiver unit comprises one or more switching and coupling nodes which couple a base band signal of the transmitter to a circuit point of the receiver unit located between said I/Q demodulator and said I/Q base band low pass filters. Preferably, one switching and coupling node couples the base band signal to a circuit point associated with the in-phase channel and another switching and coupling node couples the base band signal to a circuit point associated with the quadrature channel.

Preferably, the receiver unit of the transceiver further comprises a transmitter band stop filter located between the receiver band pass filter and the I/Q demodulator. One of said one or more switching and coupling nodes couples the signal of the transmitter oscillator to a circuit point located between said receiver band pass filter and said transmitter band stop filter. The test circuit tunes said transmitter band stop filter while the signal of the transmitter oscillator is coupled to the aforementioned said circuit point.

According to another preferred embodiment of the invention, the transmitter unit of the transceiver comprises, in addition to the transmitter oscillator, a transmitter preamplifier at the output of the transmitter unit, a notch filter located before said transmitter preamplifier, a transmitter band pass filter located before said notch filter, and an I/Q modulator located before said transmitter band pass filter. Said one or more switching and coupling nodes couple the signal of the receiver oscillator to a first circuit point located between said I/Q modulator and said transmitter band pass filter and to a second circuit point located between said transmitter band pass filter and said notch filter.

The test circuit determines which signal is generated by the receiver oscillator. Preferably, the generation of the signal of the receiver oscillator is in accordance with a test pattern implemented by the test circuit. In parallel to the input of the receiver oscillator to said circuit point, the test circuit tunes said transmitter band pass filter and said notch filter. In parallel to the tuning action, the test circuit receives a signal from the transmitter preamplifier as a feedback signal. Depending on the feedback signal, the test circuit adjusts the tuning.

As mentioned above, it is possible that the test circuit tunes, by means of the control signal, the transmitter oscillator to a desired test frequency (CW signal). According to another embodiment, a TX DAC provides a special base band (a test pattern), preferably by means of the computer program product providing the test function/functionality of the test circuit. The provided base band (the test pattern) is then converted, by means of the TX I/Q modulator and the TX oscillator, to the desired test frequency.

These as well as further features and advantages of the invention will be better appreciated by reading the following detailed description of presently preferred exemplary embodiments taken in conjunction with accompanying drawings of which:
- Fig. 1: is a block diagram of a transceiver according to an embodiment of the invention;
- Fig. 2a: is a schematic of a switching and coupling node according to the invention;
- Fig. 2b: is a circuit diagram of a switching and coupling node according to an embodiment of the invention;
- Fig. 3: is a block diagram of a homodyne receiver unit according to an embodiment of the invention; and
- Fig. 4: is a block diagram of a homodyne transmitter unit according to an embodiment of the invention.

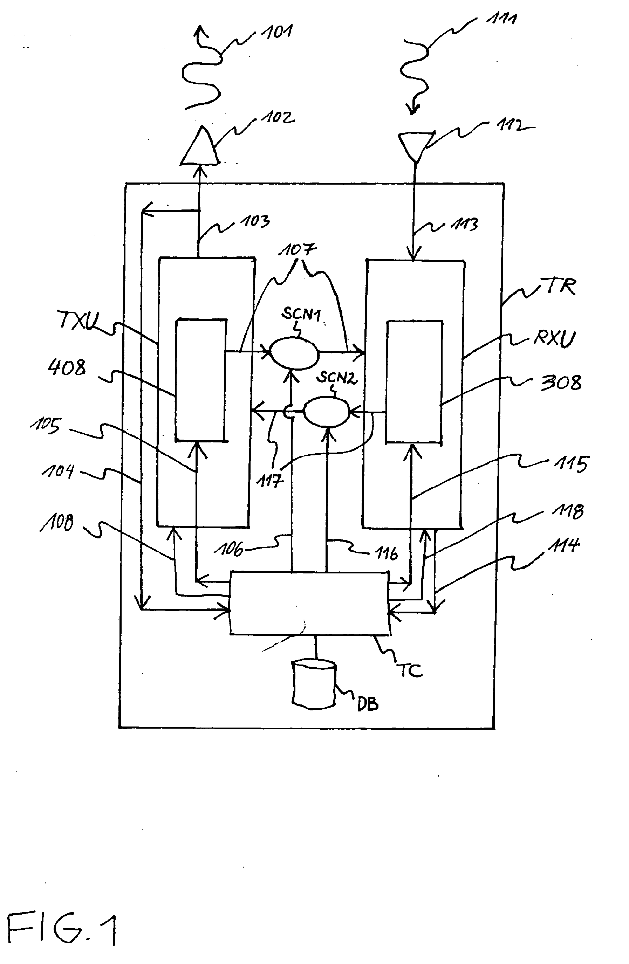

Fig. 1 shows a transceiver TR comprising a transmitter unit TXU with a transmitter oscillator 408, a receiver unit RXU With a receiver oscillator 308, and a test circuit TC. The transceiver TR further comprises a Rf sender module 102, e.g., a transmitting aerial, associated with the transmitter unit TXU and a Rf receiver module 112, e.g., a receiving aerial, associated with the receiver unit RXU. Outgoing Rf signals 101 generated by the transmitter unit TXU are sent via a transmission connection 103 from the transmitter unit TXU to the Rf sender module 102 and transmitted via the air interface. Incoming Rf signals received via the air interface at the Rf receiver module 112 are sent from the Rf receiver module 112 via a reception connection 113 to the receiver unit RXU and processed in the receiver unit RXU.

The transceiver TR, e.g., a cellular telephone or a base station receiver, is a device for interactive telecommunication across a mobile communications network, e.g., a UMTS/ GSM/ CDMA/ WiMAX network (UMTS = Universal Mobile Telecommunications System; GSM = Global System for Mobile Communications; CDMA = Code Division Multiple Access; WiMAX = Worldwide Interoperability for Microwave Access). In a preferred embodiment, the transceiver TR is based on the homodyne receive/transmit architecture, i.e., the so-called direct modulation/demodulation or I/Q modulation/demodulation. The transceiver TR may be a multi-band/multi-standard transceiver. It is also possible that the transceiver TR is a software defined, i.e., software re-configurable, radio.

The test circuit controls/tunes the transmitter oscillator 408 via signals sent on a transmitter oscillator control connection 105 and the receiver oscillator 308 via signals sent on a receiver oscillator control connection 115.

The test circuit TC is composed of one or several interlinked computers, i.e., a hardware platform, a software platform basing on the hardware platform and several application programs executed by the system platform formed by the software and hardware platform. The functionalities of the test circuit TC are provided by the execution of these application programs. The application programs or a selected part of these application programs constitute a computer software product providing a self test service as described in the following, when executed on the system platform. Further, such computer software product is constituted by a storage medium storing these application programs or said selected part of application programs.

Preferably, the hardware platform comprises a processing unit for executing the application programs and a bus, i.e., a test-and-tuning bus which is required for the switching of the oscillators to the circuit points and for performing the test, e.g., tuning the oscillators.

The test circuit TC may have access to a data base DB where test patterns or test images can be stored. In case of a certain trigger signal, e.g., an input from an operator, the test circuit TC may load a specific test programme from the data base DB and perform the corresponding self test pattern.

Both, the receiver oscillator 308 and the transmitter oscillators 408 are able to cover the complete receiver and transmitter frequency range. This can be achieved by using novel wide tuning and configurable PLL systems. Those circuits will be the next generation of local oscillators and will be used in future SW re-configurable wide band radios. The PLL's provide standard step sizes (INTEGER) as well as small step sizes (FRAC-N). The TX PLL 408 may be used for testing the RX path of the receiver unit RXU, and RX PLL 308 may be used for testing the TX path of the transmitter unit TXU. This is possible without additional tone generators and frequency converters.

The test circuit TC receives feedback signals, i.e., a receiver feedback signal associated with the outgoing Rf signals 101 from the transmitter unit TXU and a transmitter feedback signal 114 associated with processed signals created out of the incoming Rf signals 111 by the receiver unit RXU. The outgoing Rf signals 101 sent via the transmission connection 103 from the transmitter unit TXU to the Rf sender module 102 are branched off and led via a transmitter feedback connection 104 to the test circuit TC. It is to be noted that practically an external measuring equipment (not shown) will be inserted into the transmitter feedback connection 104. This may be necessary since the outgoing Rf signals 101 are in a frequency range usually not accessible by the test circuit TC. So, the external measuring equipment analyses the outgoing Rf signals 101, converts them into a signal range readable by the test circuit TC, and sends a corresponding output signal to the test circuit TC.

As the aforementioned outgoing Rf signals 101 are signals in a frequency range which cannot be processed by the test circuit TC, a measurement equipment is inserted in the transmitter feedback connection 104 wherein the measurement equipment will transform the Rf signals 101 into a frequency range which can be processed by the test circuit TC.

The processed signals created out of the incoming Rf signals 111 by the receiver unit RXU are led via a receiver feedback connection 114 from the receiver unit RXU to the test circuit TC.

The feedback signals provide the test circuit TC with a feedback on the test. Based on the feedback signals, the test circuit TC adapts the control signals / tuning commands generated by the test circuit.

The test circuit controls, tunes and adjusts one or more modules, e.g., filters or attenuators, of the transceiver TR. The test circuit TC tunes one or more modules of the transmitter unit TXU via control signals sent on a transmitter unit tune connection 108 and one or more modules of the receiver unit RXU via control signals sent on a receiver unit tune connection 118.

Via a coupling connection 107 from the transmitter oscillator 408 to the receiver unit RXU, signals of the transmitter oscillator 408 can be coupled to the circuitry of the receiver unit RXU. The coupling connection 107 comprises a first switching and coupling node SCN1 which is controlled by the test circuit by means of control signals sent via a first SCN control connection 106. Likewise, via a coupling connection 117 from the receiver oscillator 308 to the transmitter unit TXU, signals of the receiver oscillator 308 can be coupled to the circuitry of the transmitter unit TXU. The coupling connection 117 comprises a second switching and coupling node SCN2 which is controlled by the test circuit by means of control signals sent via a second SCN control connection 116.

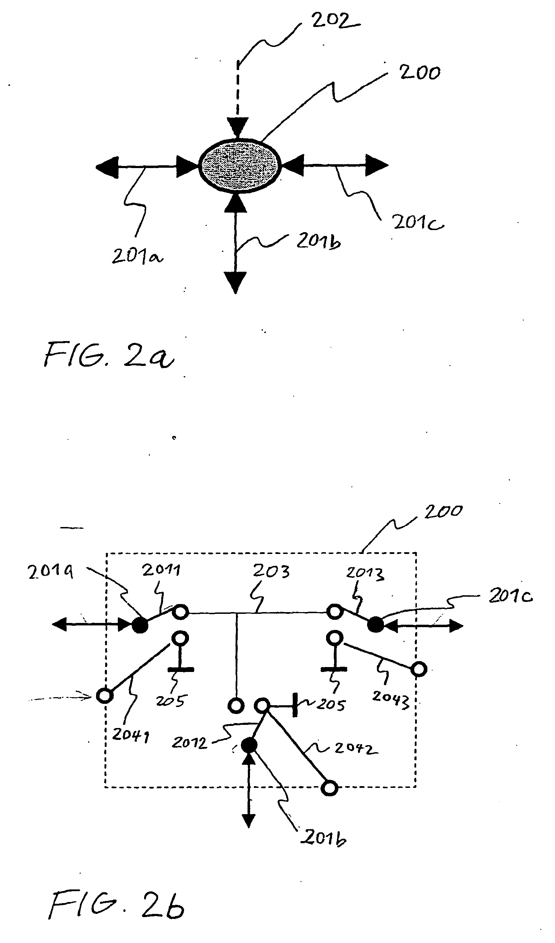

Fig. 2a shows a schematic of a switching and coupling node 200. The coupling and switching node 200 comprises at least three Rf ports which can be used as input and as output (bi-directional). Fig. 2a shows an embodiment where the switching and coupling node 200 comprises three contacts 201 a, 201 b, 201 c for input and output of signals. The switching and coupling node 200 also comprises a port 202 for receiving control inputs from the test circuit TC. The received control inputs control the way how the three contacts 201 a, 201 b, 201 c are connected to or disconnected from each other.

The receiver oscillator RXLO and the transmitter oscillator TXLO can be coupled / switched via one or more coupling and switching nodes 200 to one or more circuit points within the RX/TX chain, i.e., within the receiver unit RXU or the transmitter unit TXU. Passive circuits like attenuator pads and/or frequency selective components can been implemented. The coupling and switching node 200 does not add any noise and does not worsen the linearity, e.g. IP3. Different technologies can be used for realising the coupling and switching nodes 200, e.g., GaAs, bipolar, CMOS, MEMS and so on (CMOS = Complementary Metal Oxide Semiconductor; MEMS = Micro-ElectroMechanical System).

Fig. 2b shows an embodiment of a switching and coupling node 200. The switching and coupling node 200 comprises three conductor pins 201a, 201 b, 201 c for input and output of electrical signals. The conductor pins 201 a, 201 b, 201c can be connected by switch pins 2011, 2012, 2013 to a T-junction 203 or to a grounding 205. The switch pins 2011, 2012, 2013 are positioned to either of the two possible settings by corresponding positioning pins 2041, 2042, 2043. The action of the positioning pins 2041, 2042, 2043 is controlled by the test circuit TC. Fig. 2b shows an exemplary setting of a switching and coupling node 200 of a reflective type, i.e., short to ground. In the switching and coupling node 200 of Fig. 2b, there is a connection between the conductor pins 201 a and 201 c whereas the conductor pin 201 b has been switched off from the T-junction 203 and grounded. In general, unused (switched off) ports of the switching and coupling node 200 can be reflective (open or short) or can be terminated, e.g., 50 Ohms.

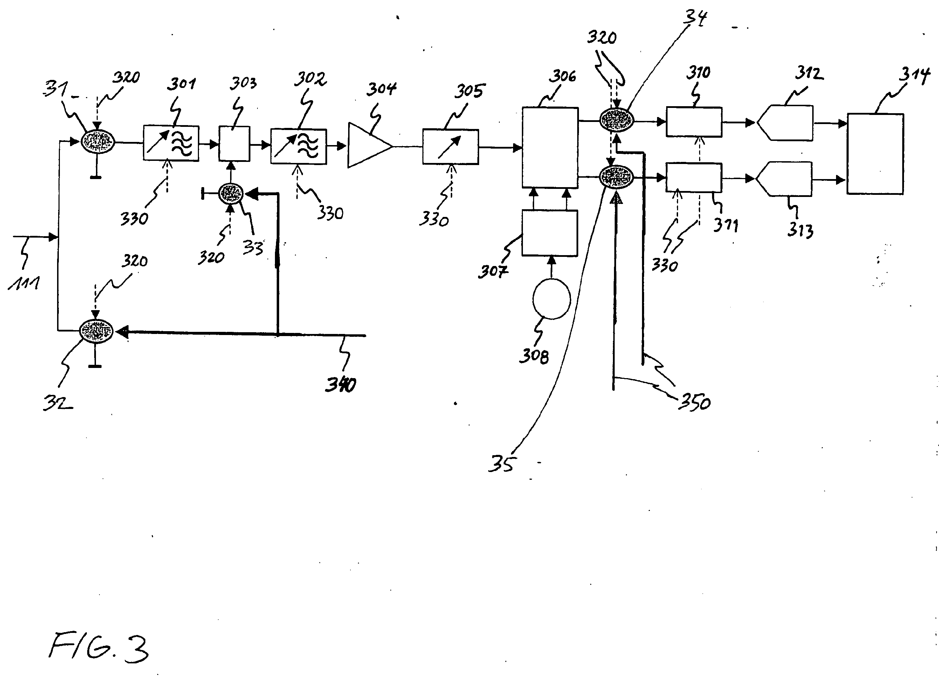

Fig. 3 shows a RX chain, i.e., a circuitry of a receiver, in particular a homodyne receiver. An incoming Rf signal 111 is received by the receiver via the air interface. Before being fed into a SCN 31, the external Rf signal 111 may interfere with an additional signal from a SCN 32, thus forming an input signal (SCN = switching and coupling node). The additional signal originates in the SCN 32 which is fed by a signal 340 from a transmitter oscillator (not shown) of a transmitter, the oscillator being tuned by a test circuit (not shown).

Behind the SCN 31, the RX chain comprises a RX band pass filter 301, followed by a matching and amplifier unit 303, followed by a TX band stop filter 302, followed by a RF amplifier 304, followed by an attenuator 305. The matching and amplifier unit 303 is connected with a SCN 33 which is also fed with the signal 340 from the transmitter oscillator 408. The test circuit controls by means of a control input 320, e.g., a control bus, the settings of the SCNs 31, 32, 33. The test circuit may tune, by means of tuning signals 330, e.g., via a tuning bus, the RX band pass filter 301, the TX band stop filter 302, and the attenuator 305. Following the attenuator 305, the RX chain comprises an I/Q demodulator 306. The I/Q demodulator 306 is fed with a signal from a receiver oscillator 308, which is modified by a divide-by-2 unit 307 located between the I/Q demodulator 306 and the receiver oscillator 308.

The signal leaving the I/Q demodulator 306 enters, now divided into an inphase channel and a quadrature channel, two SCNs 34, 35. Each of the SCNs 34, 35 is fed with a TX base band signal 350 from the transmitter, and is controlled by the test circuit via control inputs 320. The I/Q signals leaving the SCNs 34, 35 are fed into a respective I/Q base band low pass filter 310, 311, followed by respective I/Q ACSs for base band sampling 312, 313, followed by a joint digital post processor 314, shared by the I channel and the Q channel. Both, the I base band low pass filter 310 and the Q base band low pass filter 311, are tuned by the test circuit by means of individual tuning inputs 330.

The signal leaving the digital post processor 314 is fed into the test circuit as a feedback signal. The test circuit adjusts the tuning signals 330 sent to the respective units in the RX chain, the control signals 320 sent to the SCNs, and the control signal sent to the transmitter oscillator 408 depending on the feedback signal.

The aforementioned RX chain in connection with the test circuit represents a self testing and calibration configuration for homodyne transceiver systems. A self test can be applied to the RX chain by connecting the CW signal of, e.g., the transmitter oscillator via an attenuator pad and a SCN to the receiver input. A receiver test can be achieved by tuning the transmitter oscillator 408 to the RX band. For example, one or more of the following self test scenarios can be generated: RX frequency response (Rf), IF frequency response (IF, means baseband), RX step attenuator / gain ranging function, RX intermodulation (by using the output of the TX I/Q modulator and a special stimulus provided by the TX DAC; RX noise floor, RX I/Q imbalance (by generating a frequency offset in base band and testing carrier/side band suppression vs. frequency via RX ADC), TX frequency response, TX gain ranging, etc. (ADC = Analogue-to-Digital Converter).

The above described architecture can be used to tune a Rf filter. Distributed Rf filters can be tuned and calibrated as well. For example, a distributed Rf filter consists of a band pass filter for the wanted frequency (e.g., RX) and a notch filter for the unwanted frequency (e.g., TX). Both filter parts are de-coupled via a Rf amplifier and can be tuned separately. Setting the transmitter oscillator at the wanted, or unwanted, frequency, the filters can be tuned via varicaps and monitored via the built-in RX ADC. The RX ADC functions as high linear / low noise spectrum analyser can alternatively used as oscilloscope in the time domain.

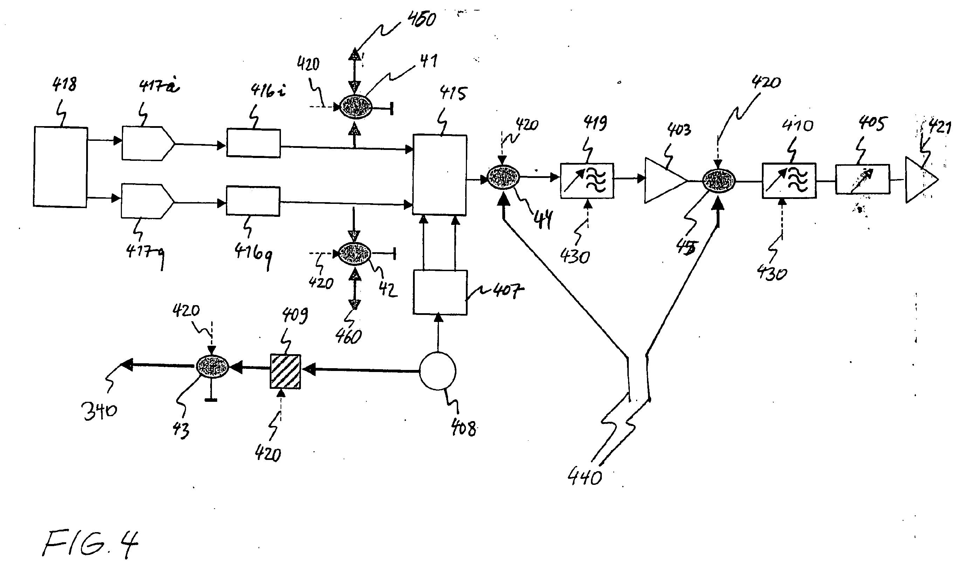

Fig. 4 shows a TX chain, i.e., a circuitry of a transmitter, in particular a homodyne transmitter. A TX digital processor 418 generates a digital signal, which is provided in an inphase channel and a quadrature channel. The inphase signal is fed into an inphase TX DAC 417i, and the quadrature signal is fed into a quadrature TX DAC 417q. The signal leaving the TX DACs 417 enters two anti alias filters 416i, 416q, separated for the inphase and the quadrature signal. The signals leaving the two anti alias filters 416i, 416q enter the joint I/Q modulator 415.

Between the anti alias filters 416i, 416q and the joint I/Q modulator 415, the signals are fed into a respective SCN 41, 42. Each of the SCNs 41, 42 is controlled by the test circuit via control inputs 420. The I/Q signals leaving the SCNs 41, 42 are led to RX ADCs 460.

The I/Q modulator 415 is fed with a signal from a transmitter oscillator 408, which is modified by a divide-by-2 unit 407 located between the I/Q modulator 415 and the transmitter oscillator 415. The signal from the transmitter oscillator 415 is also fed into a switch off logic and divide-by-2 unit 409, followed by a SCN 43. From there, the signal 340 is fed, as described above with reference to Fig. 3, as input signal to the receiver unit RXU. The test circuit TC controls by means of a control input 420, e.g., a control bus, the settings of the SCN 43 and of the switch off logic and divide-by-2 unit 409.

Behind the I/Q modulator 415, the RX chain comprises a SCN 44, followed by a TX band pass filter 419, followed by a matching and amplifier unit 403, followed by a SCN 45, followed by a RX notch filter 410, followed by an attenuator 405, followed by a TX preamplifier 421. The SCN 44 and the SCN 45 are fed with a signal 440 from the receiver oscillator 308.

The test circuit controls by means of a control input 320, e.g., a control bus, the settings of the SCNs 44, 45. The test circuit may tune, by means of tuning -signals 430, e.g., via a tuning bus, the TX band pass-filter 419 and the RX notch filter 410.

The signal leaving the TX preamplifier 421 is fed into the test circuit as a feedback signal. The test circuit adjusts the tuning signals 430 sent to the respective units in the TX chain, the control signals 420 sent to the SCNs, and the control signal sent to the receiver oscillator 308 depending on the feedback signal.

The aforementioned TX chain in connection with the test circuit represents a self testing and calibration configuration for homodyne transceiver systems. With regard to the self test options, it is referred to the aforementioned possibilities described with regard to the RX chain. The possibilities which are valid with the RX chain also apply in an analogous way also to the TX chain.

## Claims

1. A method of performing a test of a transceiver (TR) comprising a radio frequency transmitter unit (TXU) with a transmitter oscillator (408) providing a carrier frequency of an outgoing radio frequency signal of the radio frequency transmitter unit (TXU) and a radio frequency receiver unit (RXU) with a receiver oscillator (308) providing a frequency signal for demodulation of an incoming radio frequency signal,
the method comprising the step of:
coupling a signal of the transmitter oscillator (408) to one or more circuit points of the receiver unit (RXU) or a signal of the receiver oscillator (308) to one or more circuit points of the transmitter unit (TXU),
**characterised in**
**that** the method further comprises the step of controlling, by a test circuit (TC), the signal of the transmitter oscillator (408) or receiver oscillator (308) to perform the test, and
**that** the receiver oscillator (308) and the transmitter oscillator (408) are wide band oscillators which are able to cover the complete receiver and transmitter frequency range.

2. The method of claim 1,
**characterised in**
**that** the method further comprises the step of:
tuning, by the test circuit (TC), the signal of the transmitter oscillator (408) or receiver oscillator (308) so that the signal covers a frequency range of the receiver unit (RXU) and the transmitter unit (TXU), respectively.

3. The method of claim 1,
**characterised in**
**that** the method further comprises the step of:
collecting a digital output of the receiver unit (RXU); and
providing, based on the digital output, a feedback signal to the test circuit (TC) controlling the transmitter oscillator (408) feeding a circuit point of the receiver unit (RXU).

4. The method of claim 1,
**characterised in**
**that** the method further comprises the step of:
analysing the outgoing radio frequency signal of the transmitter unit (TXU) with a measuring equipment; and
providing, based on the analysed radio frequency signal, a feedback signal to the test circuit (TC) controlling the receiver oscillator (308) feeding a circuit point of the transmitter unit (TXU).

5. The method of claim 1,
**characterised in**
**that** the method further comprises the steps of:
connecting a continuous wave signal of the transmitter oscillator (408) to an input of the receiver unit (RXU); and
testing and tuning one or more filters of the receiver unit (RXU) by tuning the transmitter oscillator (408) to a frequency range of the incoming radio frequency signal.

6. A transceiver (TR) comprising a radio frequency transmitter unit (TXU) with a transmitter oscillator (408) providing a carrier frequency of an outgoing radio frequency signal of the radio frequency transmitter unit (TXU), a radio frequency receiver unit (RXU) with a receiver oscillator (308) providing a frequency signal for demodulation of an incoming radio frequency signal,
and one or more switching and coupling nodes (SCN) adapted to couple a signal of the transmitter oscillator (408) to one or more circuit points of the receiver unit (RXU) or a signal of the receiver oscillator (308) to one or more circuit points of the transmitter unit (TXU),
**characterised in**
**that** the transceiver (TR) further comprises a test circuit (TC) adapted to control said one or more switching and coupling nodes (SCN) and the signal of the transmitter oscillator (408) or receiver oscillator (308) to perform a test of the transceiver (TR), and
**that** the receiver oscillator (308) and the transmitter oscillator (408) are wide band oscillators which are able to cover the complete receiver and transmitter frequency range.

7. The transceiver (TR) of claim 6,
**characterised in**
**that** the receiver unit (RXU) further comprises a receiver band pass filter (301) at the input of the receiver unit (RXU), an I/Q demodulator (306) located behind said receiver band pass filter (301). I/Q base band low pass filters (310, 311) located behind said I/Q demodulator (306), and a digital post processing unit (314) located behind said I/Q base band low pass filters (310, 311), that one of said one or more switching and coupling nodes (SCN) is adapted to couple the signal of the transmitter oscillator (408) to a circuit point located before the receiver band pass filter (301), that the test circuit (TC) is adapted to tune said receiver band pass filter (301) and said I/Q base band low pass filters (310, 311), and that the test circuit (TC) is adapted to receive a signal from the digital post processing unit (314) as a feedback signal.

8. The transceiver (TR) of claim 7,
**characterised in**
**that** the receiver unit (RXU) further comprises a transmitter band stop filter (302) located between the receiver band pass filter (301) and the I/Q demodulator (306), that one of said one or more switching and coupling nodes (SCN) is adapted to couple the signal of the transmitter oscillator (408) to a circuit point located between said receiver band pass filter (301) and said transmitter band stop filter (302), and that the test circuit (TC) is adapted to tune said transmitter band stop filter (302).

9. The transceiver (TR) of claim 7,
**characterised in**
**that** the receiver unit (RXU) comprises one or more switching and coupling nodes (SCN) adapted to couple a base band signal of the transmitter (TXU) to a circuit point of the receiver unit (RXU) located between said I/Q demodulator (306) and said I/Q base band low pass filters (310, 311).

10. The transceiver (TR) of claim 6,
**characterised in**
**that** the transmitter unit (TXU) further comprises a transmitter preamplifier (421) at the output of the transmitter unit (TXU), a notch filter (420) located before said transmitter preamplifier (421), a transmitter band pass filter (419) located before said notch filter (420), and an I/Q modulator (415) located before said transmitter band pass filter (419), that said one or more switching and coupling nodes (SCN) are adapted to couple the signal of the receiver oscillator (308) to a circuit point located between said I/Q modulator (415) and said transmitter band pass filter (419) and to a circuit point located between said transmitter band pass filter (419) and said notch filter (420), that the test circuit (TC) is adapted to tune said transmitter band pass filter (419) and said notch filter (420), and that the test circuit (TC) is adapted to receive a signal from an external measuring equipment as a feedback signal.

## Patentansprüche

1. Verfahren zur Überprüfung eines Sende-/Empfangsgerätes (TR), welches eine Funkfrequenz-Sendeeinheit (TXU) mit einem Sendeoszillator (408), der eine Trägerfrequenz eines ausgehenden Funkfrequenzsignals der Funkfrequenz-Sendeeinheit (TXU) bereitstellt, und eine Funkfrequenz-Empfangseinheit (RXU) mit einem Empfangsoszillator (308), der ein Frequenzsignal für die Demodulation eines eingehenden Funkfrequenzsignals bereitstellt, umfasst,
wobei das Verfahren den folgenden Schritt umfasst:
Koppeln eines Signals des Sendeoszillators (408) an einen oder mehrere Schaltungspunkte der Empfangseinheit (RXU) oder eines Signals des Empfangsoszillators (308) an einen oder mehrere Schaltungspunkte der Sendeeinheit (TXU),
**dadurch gekennzeichnet,**
**dass** das Verfahren weiterhin den Schritt des Steuerns, anhand einer Prüfschaltung (TC), des Signals des Sendeoszillators (408) oder Empfangsoszillators (308) umfasst,
um die Überprüfung durchzuführen, und dass der Empfangsoszillator (308) und der Sendeoszillator (408) Breitbandøszillatoren und dazu ausgelegt sind, den kompletten Empfangs- und Sendefrequenzbereich abzudecken.

2. Das Verfahren nach Anspruch 1.
**dadurch gekennzeichnet,**
**dass** das Verfahren weiterhin den folgenden Schritt umfasst:
Abstimmen, anhand der Prüfschaltung (TC), des Signals des Sendeoszillators (408) oder Empfangsoszillators (308), so dass das Signal jeweils einen Frequenzbereich der Empfangseinheit (RXU) und der Sendeeinheit (TXU) abdeckt.

3. Das Verfahren nach Anspruch 1,
**dadurch gekennzeichnet,**
**dass** das Verfahren weiterhin den folgenden Schritt umfasst:
Erfassen einer Digitalausgabe der Empfangseinheit (RXU); und
Bereitstellen, auf der Basis der Digitalausgabe, eines Rückkopplungssignals an die Prüfschaltung (TC), welche den Sendeoszillator (408), der einen Schaltungspunkt der Empfangseinheit (RXU) versorgt, steuert.

4. Das Verfahren nach Anspruch 1,
**dadurch gekennzeichnet,**
**dass** das Verfahren weiterhin den folgenden Schritt umfasst:
Analysieren des ausgehenden Funkfrequenzsignals der Sendeeinheit (TXU) mit einem Messgerät; und
Bereitstellen, auf der Basis des analysierten Funkfrequenzsignals, eines Rückkopplungssignals an die Prüfschaltung (TC), welche den Empfangsoszillator (308), der einen Schaltungspunkt der Sendeeinheit (TXU) versorgt, steuert.

5. Das Verfahren nach Anspruch 1,
**dadurch gekennzeichnet,**
**dass** das Verfahren die folgenden Schritte umfasst:
Verbinden eines kontinuierlichen Wellensignals des Sendeoszillators (408) mit einem Eingang der Empfangseinheit (RXU); und
Überprüfen und Abstimmen eines oder mehrerer Filter der Empfangseinheit (RXU) durch Abstimmen des Sendebszillators (408) auf einen Frequenzbereich des eingehenden Funkfrequenzsignäls.

6. Sende-/Empfangsgerät (TR), welches eine Funkfrequenz-Sendeeinheit (TXU) mit einem Sendeoszillator (408), der eine Trägerfrequenz eines ausgehenden Funkfrequenzsignals der Funkfrequenz-Sendeeinheit (TXU) bereitstellt, und eine Funkfrequenz-Empfangseinheit (RXU) mit einem Empfangsoszillator (308), der ein Frequenzsignal für die Demodulation eines eingehenden Funkfrequenzsignals bereitstellt,
und einen oder mehrere Vermittlungs- und Kopplungsknoten (SCN), welche dazu ausgelegt sind, ein Signal des Sendeoszillators (408) an einen oder mehrere Schaltungspunkte der Empfangseinheit (RXU) oder ein Signal des Empfangsoszillators (308) an einen oder mehrere Schaltungspunkte der Sendeeinheit (TXU) zu koppeln, umfasst,
**dadurch gekennzeichnet,**
**dass** das Sende-/Empfangsgerät (TR) weiterhin eine Prüfschaltung (TC) umfasst, welche dazu ausgelegt ist, einen oder mehrere Vermittlungs- und Kopplungsknoten (SCN) und das Signal des Sendeoszillators (408) oder Empfangsoszillators (308) zu steuern, um eine Überprüfung des Sende-/Empfangsgeräts (TR) durchzuführen, und dass der Empfangsoszillator (308) und der Sendeoszillator (408) Breitbandoszillatoren und dazu ausgelegt sind, den kompletten Empfangs- und Sendefrequenzbereich abzudecken.

7. Sende-/Empfangsgerät (TR) nach Anspruch 6,
**dadurch gekennzeichnet,**
**dass** die Empfangseinheit (RXU) weiterhin einen Empfänger-Bandpassfilter (301) am Eingang der Empfangseinheit (RXU), einen hinter dem besagten Empfänger-Bandpassfilter (301) angeordneten I/Q-Demodulator (306), hinter dem besagten I/Q-Demodulator (306) angeordnete I/Q-Basisband-Tiefpassfilter (310, 311) und eine hinter den besagten I/Q-Basisband-Tiefpassfiltern (310, 311) angeordnete digitale Nachverarbeitungseinheit (314) umfasst, dass der besagte eine oder einer der besagten mehreren Vermittlungs- und Kopplungsknoten (SCN) dazu ausgelegt ist, das Signal des Sendeoszillators (408) an einen vor dem Empfänger-Bandpassfilter (301) angeordneten Schaltungspunkt zu koppeln, dass die Prüfschaltung (TC) dazu ausgelegt ist, den besagten Empfänger-Bandpassfilter (301) und die besagten I/Q-Basisband-Tiefpassfilter (310, 311) abzustimmen, und dass die Prüfschaltung (TC) dazu ausgelegt ist, ein Signal von der digitalen Nachverarbeitungseinheit (314) als ein Rückkopplungssignal zu empfangen.

8. Das Sende-/Empfangsgerät (TR) nach Anspruch 7,
**dadurch gekennzeichnet,**
**dass** die Empfangseinheit (RXU) weiterhin einen zwischen dem Empfänger-Bandpassfilter (301) und dem I/Q-Demodulator (306) angeordneten Sende-Bandsperrfilter (302) umfasst, dass der oder einer der besagten mehreren Vermittlungs- und Kopplungsknoten (SCN) dazu ausgelegt ist, das Signal des Sendeoszillators (408) an einen zwischen dem besagten Empfänger-Bandpassfilter (301) und dem besagten Sende-Bandsperrfilter (302) angeordneten Schaltungspunkt zu koppeln, und dass die Prüfschaltung (TC) dazu ausgelegt ist, den besagten Sende-Bandsperrfilter (302) abzustimmen.

9. Das Sende-/Empfangsgerät (TR) nach Anspruch 7,
**dadurch gekennzeichnet,**
**dass** die Empfangseinheit (RXU) einen oder mehrere Vermittlungs- und Kopplungsknoten (SCN) umfasst, welche dazu ausgelegt sind, ein Basisbandsignal des Senders (TXU) an einen zwischen dem besagten I/Q-Demodulator (306) und den besagten I/Q-Basisband-Tiefpassfiltern (310, 311) angeordneten Schaltungspunkt der Empfangseinheit (RXU) zu koppeln.

10. Das Sende-/Empfangsgerät (TR) nach Anspruch 6,
**dadurch gekennzeichnet,**
**dass** die Sendeeinheit (TXU) weiterhin einen Sendevorverstärker (421) am Ausgang der Sendeeinheit (TXU), einen vor dem besagten Sendevorverstärker (421) angeordneten Kerbfilter (420), einen vor dem besagten Kerbfilter (420) angeordneten Sender-Bandpassfilter (419) und einen vor dem besagten Sender-Bandpassfilter (419) angeordneten I/Q-Modulator (415) umfasst, dass der besagte oder einer der besagten mehreren Vermittlungs- und Kopplungsknoten (SCN) dazu ausgelegt ist, das Signal des Empfangsoszillators (308) an einen zwischen dem besagten I/Q-Modulator (415) und dem besagten Sender-Bandpassfilter (419) angeordneten Schaltungspunkt und an einen zwischen dem besagten Sender-Bandpassfilter (419) und dem besagten Kerbfilter (420) angeordneten Schaltungspunkt zu koppeln, dass die Prüfschaltung (TC) dazu ausgelegt ist, den besagten Sender-Bandpassfilter (419) und den besagten Kerbfilter (420) abzustimmen, und dass die Prüfschaltung (TC) dazu ausgelegt ist, ein Signal von einem externen Messgerät als ein Rückkopplungssignal zu empfangen.

## Revendications

1. Procédé pour réaliser un essai d'un émetteur/récepteur (TR) comprenant une unité d'émission de radiofréquences (TXU) avec un oscillateur d'émetteur (408) qui délivre une fréquence porteuse d'un signal de radiofréquence sortant de l'unité d'émission de radiofréquences (TXU) et une unité de réception de radiofréquences (RXU) avec un oscillateur de récepteur (308) qui délivre un signal de fréquence pour la démodulation d'un signal de radiofréquence entrant,
le procédé comprenant les étapes suivantes :
application d'un signal de l'oscillateur d'émetteur (408) à un ou plusieurs points du circuit de l'unité de réception (RXU) ou d'un signal de l'oscillateur de récepteur (308) à un ou plusieurs points du circuit de l'unité d'émission (TXU),
**caractérisé en ce**
**que** le procédé comprend en outre l'étape de contrôle, par un circuit de test (TC), du signal de l'oscillateur d'émetteur (408) ou de l'oscillateur de récepteur (308) pour effectuer l'essai et que l'oscillateur de récepteur (308) et l'oscillateur d'émetteur (408) sont des oscillateurs à large bande qui sont capables de couvrir la totalité de la bande de fréquences du récepteur et de l'émetteur.

2. Procédé selon la revendication 1,
**caractérisé en ce**
**que** le procédé comprend en outre l'étape suivante :
accord, par le circuit de test (TC), du signal de l'oscillateur d'émetteur (408) ou de l'oscillateur de récepteur (308) de sorte que le signal couvre respectivement une plage de fréquences de l'unité de réception (RXU) et de l'unité d'émission (TXU).

3. Procédé selon la revendication 1,
**caractérisé en ce**
**que** le procédé comprend en outre l'étape suivante :
collecte d'une sortie numérique de l'unité de réception (RXU) ; et délivrance, en se basant sur la sortie numérique, d'un signal de retour au circuit de test (TC) contrôlant l'oscillateur d'émetteur (408) qui alimente un point du circuit de l'unité de réception (RXU).

4. Procédé selon la revendication 1,
**caractérisé en ce**
**que** le procédé comprend en outre l'étape suivante :
analyse du signal de radiofréquence sortant de l'unité d'émission (TXU) avec un équipement de mesure ; et
délivrance, en se basant sur le signal de radiofréquence analysé, d'un signal de retour au circuit de test (TC) contrôlant l'oscillateur de récepteur (308) qui alimente un point du circuit de l'unité d'émission (TXU).

5. Procédé selon la revendication 1,
**caractérisé en ce**
**que** le procédé comprend en outre les étapes suivantes :
application d'un signal à onde continue de l'oscillateur d'émetteur (408) à une entrée de l'unité de réception (RXU) ; et
essai puis accord d'un ou plusieurs filtres de l'unité de réception (RXU) en accordant l'oscillateur d'émetteur (408) à une plage de fréquences du signal de radiofréquence entrant.

6. Émetteur/récepteur (TR) comprenant une unité d'émission de radiofréquences (TXU) avec un oscillateur d'émetteur (408) qui délivre une fréquence porteuse d'un signal de radiofréquence sortant de l'unité d'émission de radiofréquences (TXU), une unité de réception de radiofréquences (RXU) avec un oscillateur de récepteur (308) qui délivre un signal de fréquence pour la démodulation d'un signal de radiofréquence entrant,
et un ou plusieurs noeuds de commutation et de couplage (SCN) adaptés pour appliquer un signal de l'oscillateur d'émetteur (408) à un ou plusieurs points du circuit de l'unité de réception (RXU) ou un signal de l'oscillateur de récepteur (308) à un ou plusieurs points du circuit de l'unité d'émission (TXU),
**caractérisé en ce**
**que** l'émetteur/récepteur (TR) comprend en outre un circuit de test (TC) adapté pour contrôler lesdits un ou plusieurs noeuds de commutation et de couplage (SCN) et le signal de l'oscillateur d'émetteur (408) ou de l'oscillateur de récepteur (308) pour effectuer un essai de l'émetteur/nécepteur (TR) et
**que** l'oscillateur de récepteur (308) et l'oscillateur d'émetteur (408) sont des oscillateurs à large bande qui sont capables de couvrir la totalité de la bande de fréquences du récepteur et de l'émetteur.

7. Émetteur/récepteur (TR) selon la revendication 6,
**caractérisé en ce**
**que** l'unité de réception (RXU) comprend en outre un filtre passe-bande (301) à l'entrée de l'unité de réception (RXU), un démodulateur I/Q (306) qui se trouve derrière ledit filtre passe-bande (301), des filtres passe-bas en bande de base I/Q (310, 311) qui se trouvent derrière ledit démodulateur I/C (306), et une unité de post-traitement numérique (314) qui se trouve derrière lesdits filtres passe-bas en bande de base I/Q (310, 311 que l'un desdits un ou plusieurs noeuds de commutation et de couplage (SCN) est adapté pour appliquer le signal de l'oscillateur d'émetteur (408) à un point de circuit qui se trouve avant le filtre passe-bande du récepteur (301), que le circuit de test (TC) est adapté pour accorder ledit filtre passe-bande du récepteur (301) et lesdits filtres passe-bas en bande de base I/Q (310, 311 et que le circuit de test (TC) est adapté pour recevoir un signal de la part de l'unité de post-traitement numérique (314) sous la forme d'un signal de retour.

8. Émetteur/récepteur (TR) selon la revendication 7,
**caractérisé en ce**
**que** l'unité de réception (RXU) comprend en outre un filtre coupe-bande d'émetteur (302) qui se trouve entre le filtre passe-bande de récepteur (301) et le démodulateur I/Q (306), que l'un desdits un ou plusieurs noeuds de commutation et de couplage (SCN) est adapté pour appliquer le signal de l'oscillateur d'émetteur (408) à un point du circuit qui se trouve entre ledit filtre passe-bande du récepteur (301) et ledit filtre coupe-bande de l'émetteur (302), et que le circuit de test (TC) est adapté pour accorder ledit filtre coupe-bande d'émetteur (302).

9. Émetteur/récepteur (TR) selon la revendication 7,
**caractérisé en ce**
**que** l'unité de réception (RXU) comprend un ou plusieurs noeuds de commutation et de couplage (SCN) adaptés pour appliquer un signal en bande de base de l'émetteur (TXU) à un point du circuit de l'unité de réception (RXU) qui se trouve entre ledit démodulateur I/Q (306) et lesdits filtres passe-bas en bande de base I/Q (310, 311).

10. Émetteur/récepteur (TR) selon la revendication 6,
**caractérisé en ce**
**que** l'unité d'émission (TXU) comprend en outre un préamplificateur d'émetteur (421) à la sortie de l'unité d'émission (TXU), un filtre coupe-bande (420) qui se trouve avant ledit préamplificateur d'émetteur (421), un filtre passe-bande d'émetteur (419) qui se trouve avant ledit filtre coupe-bande (420) et un modulateur I/Q (415) qui se trouve avant ledit filtre passe-bande d'émetteur (419), que lesdits un ou plusieurs noeuds de commutation et de couplage (SCN) sont adaptés pour appliquer le signal de l'oscillateur de récepteur (308) à un point de circuit qui se trouve entre ledit modulateur I/Q (415) et ledit filtre passe-bande de l'émetteur (419) et à un point de circuit qui se trouve entre ledit filtre passe-bande d'émetteur (419) et ledit filtre coupe-bande (420), que le circuit de test (TC) est adapté pour accorder ledit filtre passe-bande d'émetteur (419) et ledit filtre coupe-bande (420), et que le circuit de test (TC) est adapté pour recevoir un signal de la part d'un équipement de mesure externe sous la forme d'un signal de retour.
